# NEUE EUROPÄISCHE PATENTSCHRIFT

(11) **EP 0 647 496 B2**
(45) Veröffentlichungstag und Bekanntmachung des Hinweises auf die Entscheidung über den Einspruch: **04.12.2002**
(45) Hinweis auf die Patenterteilung: 18.09.1996
(21) Anmeldenummer: 94120641.9
(22) Anmeldetag: 15.07.1992
(51) Int. Cl.: B23K 9/20, F16B 21/16

(54) **Bolzen**
Studs
Plots de contracts

(30) Priorität: 15.11.1991 DE 9114218 U; 15.11.1991 DE 9114219 U; 15.11.1991 DE 9114220 U
(43) Veröffentlichungstag der Anmeldung: 12.04.1995
(62) Teilanmeldung aus: 92112045.7
(73) Patentinhaber: Ludwig Demmler GmbH & Co., 87751 Heimertingen (DE)
(72) Erfinder: Demmeler, Ludwig, D-87737 Boos (DE); Demmeler, Johannes, D-87737 Boos (DE)
(74) Vertreter: Hutzelmann, Gerhard

(56) Entgegenhaltungen:
- EP-A- 0 148 039
- FR-A- 932 459
- US-A- 3 180 390
- Prospekt der Fa. Jergens Inc., 1991 "Ball Lock Mounting System"

## Beschreibung

Die Erfindung bezieht sich auf einen Bolzen zum lösbaren Verbinden eines mit Durchgangsbohrungen oder dergleichen versehenen Bauteils, mit einem weiteren ebenfalls mit Durchgangsbohrungen versehenen Bauteil, wie z.B. einem Tisch, wobei die Durchgangsbohrungen im Querschnitt kreisförmig oder langlochförmig ausgebildet sind und zylindrische oder parallele Wände aufweisen.

Aus der Veröffentlichung Ball-Lock-System ist ein Bolzen zum lösbaren Verbinden eines mit Durchgangsbohrungen oder dergleichen versehenen Bauteils, mit einem weiteren ebenfalls mit Durchgangsbohrungen versehenen Bauteil, wie z.B. einem Tisch, wobei die Durchgangsbohrungen im Querschnitt kreisförmig oder langlochförmig ausgebildet sind und zylindrische oder parallele Wände aufweisen, wobei der Bolzen ein Bolzengehäuse aufweist und mit einer axial verlaufenden Gewindespindel versehen ist, wobei beim Hereindrehen der Gewindespindel in das Bolzengehäuse Verhakungsmittel in radialer Richtung aus dem Bolzen herausgedrückt werden, wobei als Verhakungsmittel Kugeln vorgesehen sind, welche in radialen Bohrungen des Bolzengehäuses gelagert sind, bekannt.

Die FR-A-932459 beschreibt einen Bolzen zum lösbaren Verbinden eines mit Durchgangsbohrungen oder dergleichen versehenen Bauteils, mit einem weiteren ebenfalls mit Durchgangsbohrungen versehenen Bauteil, wobei die Durchgangsbohrungen im Querschnitt kreisförmig oder langlochförmig ausgebildet sind und zylindrische oder parallele Wände aufweisen, wobei der Bolzen mit einem axial verlaufenden Stift versehen ist, welcher einen Zapfen aufweist, der beim Hereinschieben des Stiftes in den Bolzen Kugeln in radialer Richtung aus dem Bolzen herausdrückt.

Der Erfindung liegt die Aufgabe zugrunde, einen Bolzen zu schaffen, der auf einfache Weise und mit wenigen Handgriffen zwei Bauteile sicher miteinander verbindet.

Diese Aufgabe wird erfindungsgemäß durch die Merkmale des Anspruchs 1 gelöst.

Der Bolzen wird einfach in zwei hintereinander zur Deckung gebrachte zylindrisch oder langlochförmig ausgebildete Durchgangsbohrungen eingesteckt; durch Verdrehen des Handgriffs werden die Verhakungsmittel herausgedrückt und hinter der Durchgangsbohrung verhakt. Der Handgriff wird dabei durch die Gewindespindel gegen das ihm zugekehrte Bauteil gezogen und beide Bauteile werden miteinander verspannt, wodurch eine sehr rationell arbeitende Spanneinrichtung geschaffen ist.

Zum Lösen dieser Verbindung muß lediglich der Handgriff zurückgedreht werden, worauf der Zapfen die Verhakungsmittel freigibt und der Bolzen herausgezogen werden kann.

Sehr vorteilhaft ist es dabei, wenn erfindungsgemäß der Zapfen am vom Handgriff abgewandten Ende der Gewindespindel angeordnet ist und an seinem von diesem abgekehrten Ende einen konischen Abschnitt aufweist, welcher beim Eindrehen der Gewindespindel in den Bolzen die Verhakungsmittel nach außen drückt.

Damit ist eine sehr einfache und funktionssichere konstruktive Ausgestaltung erreicht.

Eine ebenfalls sehr vorteilhafte Ausgestaltung der Erfindung liegt darin, daß im Anschluß an den konischen Abschnitt ein im Querschnitt dünnerer Zapfen angeordnet ist, an welchen sich die Verhakungsmittel im eingezogenen Zustand anlegen.

Damit wird verhindert, daß die Verhakungsmittel unkontrolliert ins Innere des Bolzens gelangen.

Kugeln als Verhakungsmittel zu verwenden hat sich als sehr vorteilhaft erwiesen, da sie sehr verschleißfest sind, leicht zu handhaben und einzubauen und darüber hinaus äußerst preisgünstig sind.
In die zu ihrer Aufnahme vorgesehenen radialen Bohrungen lassen sich die Kugeln darüber hinaus leicht einsetzen.

Die radialen Bohrungen zur Aufnahme der Kugeln lassen sich leicht von außen herstellen und können dann gemäß der Erfindung an ihrer Gehäuseaußenseite wenigstens punktförmig angestaucht werden.

Die von innen eingebrachten Kugeln können dann nicht mehr aus diesen Bohrungen nach außen herausfallen.

Sehr vorteilhaft ist es außerdem, wenn gemäß der Erfindung das Bolzengehäuse mit einer zur Aufnahme der Gewindespindel vorgesehenen Sackbohrung versehen ist.

Damit ist das Bolzengehäuse an seiner Unterseite verschlossen und es können weder Schmutz noch Schweißperlen eindringen und Funktionsstörungen hervorrufen.

Dies kann noch weiter verbessert werden, wenn erfindungsgemäß das zum Einsetzen der Gewindespindel vorgesehene Ende des Bolzengehäuses mit einem einbördelbaren ringförmigen Ansatz versehen ist.

Nach der Fertigmontage des Bolzens wird dieser Ansatz dann eingebördelt, wodurch das Gehäuse völlig verschlossen ist.

Der Gummiring od.dgl. übt beim Drehen des Handgriffs ein Bremsmoment auf das Bolzengehäuse aus, so daß sich dieses nicht mitdreht bis die Verhakungsmittel gegriffen haben.

Sehr günstig ist es auch, wenn gemäß einer weiteren Ausgestaltung der Erfindung der Handgriff zylinderförmig ausgebildet ist und einen gegenüber dem Bolzengehäuse größeren Durchmesser aufweist.

Dadurch kann der Handgriff direkt als Spannmittel verwendet werden.

Die Handhabung des Bolzens wird noch weiter verbessert, wenn erfindungsgemäß die Umfangsfläche des zylinderförmigen Handgriffs mit einer Rändelung versehen ist.

Dadurch läßt sich der Handgriff besonders leicht erfassen und drehen.

Um den Bolzen jedoch fest anziehen zu können kann der Handgriff gemäß einer weiteren vorteilhaften Ausgestaltung noch mit einer zentrisch angeordneten Öffnung zur Aufnahme eines Drehwerkzeuges, beispielsweise eines Sechskantschlüssels versehen sein.

In der Zeichnung ist die Erfindung anhand mehrerer Ausführungsbeispiele veranschaulicht. Dabei zeigen:
- Fig.1: eine schaubildliche Darstellung eines Tisches mit einer Vielzahl zylindrischer Duchgangsbohrungen sowohl in der Tischplatte als auch in den seitlichen Wangen,
- Fig.2: eine Ansicht einer winkelförmigen Stütze, die über einen Bolzen am Tisch befestigt ist,
- Fig.3: eine Ansicht einer C-förmigen Stütze, die mit einem ihrer kürzeren Schenkel auf der Tischplatte aufliegt,
- Fig.4: mehrere hintereinander angeordnete winkelförmige Stützen, die an der Tischplatte befestigt sind,
- Fig.5: eine schaubildliche Darstellung eines Bolzens, mit einem gerändelten Handgriff und drei Kugeln als Verhakungsmittel,
- Fig.6: den in zwei plattenförmige Bauteile eingesetzten Bolzen,

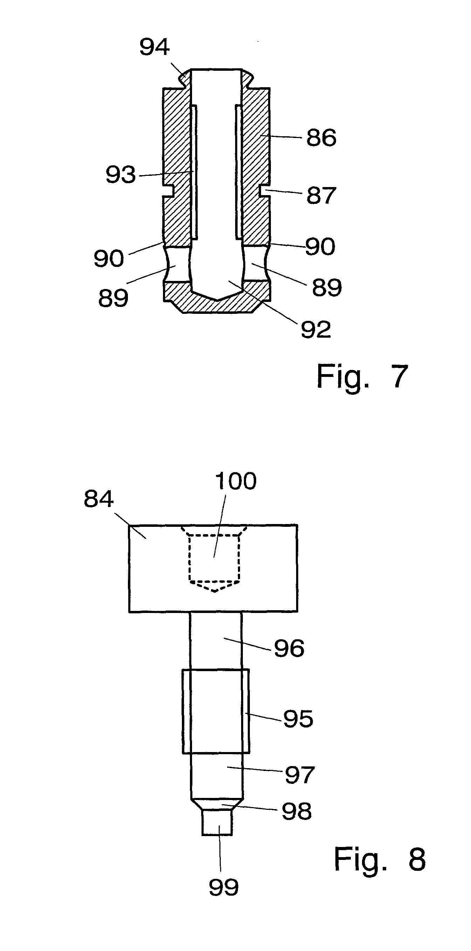

- Fig.7: einen Längsschnitt durch das Gehäuse des Bolzens und
- Fig.8: eine Ansicht der Innenspindel des Bolzens.

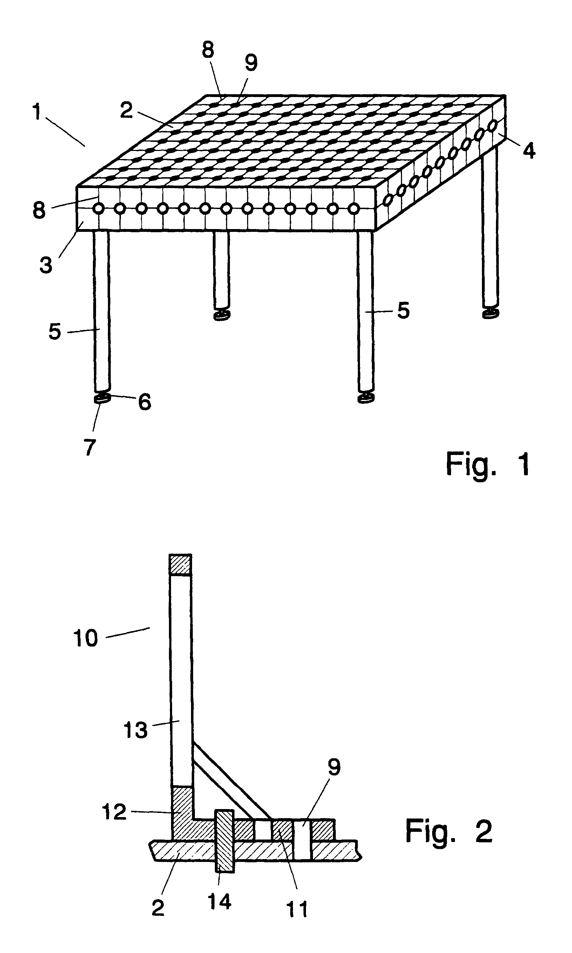

Mit 1 ist in Fig.1 ein Tisch bezeichnet, der eine Tischplatte 2 und daran angeordnete, senkrecht nach unten stehende seitliche Wangen 3 und 4 aufweist.

An der Unterseite der Tischplatte 2 sind vier Beine 5 angeschraubt, welche an ihrem unteren Ende mit über Gewindspindeln 6 höhenverstellbaren Füßen 7 versehen sind.

Durch Auswechseln der Beine und Einstellen der Füße ist eine große Anpassungsfähigkeit des Tisches an unterschiedlichste Anforderungen gegeben.

Die Tischplatte 2 ist mit einem Rasterliniennetz versehen, dessen Rasterlinien 8 von der jeweiligen Außenkante und untereinander einen gleichbleibenden Abstand von 10 cm aufweisen. An den Kreuzungspunkten dieser Rasterlinien 8 ist jeweils eine Durchgangsbohrung 9 vorgesehen, welche im rechten Winkel zur Tischplattenoberfläche verläuft. Diese Rasterlinien 8 gehen auch über die Kanten der Tischplatte 2 in die seitlichen Wangen 3 und 4 über, wo ebenfalls Durchgangsbohrungen 9 vorgesehen sind. An den Rasterlinien 8 können Markierungen in Form von fortlaufenden Zahlen oder Maßangaben angebracht sein.

In Fig. 2 ist auf die Tischplatte 2 eine winkelförmige Stütze 10 aufgesetzt, welche zwei im rechten Winkel zueinander angeordnete Schenkel 11 und 12 aufweist. Im einen Schenkel 11 sind ebenfalls Durchgangsbohrungen 9 vorgesehen, die mit gegenüber denen der Tischplatte halber Teilung angeordnet sind, d.h. einen gegenseitigen Abstand von 5 cm aufweisen. Im anderen Schenkel 12 ist dagegen eine langlochförmige Durchbrechung 13 vorgesehen, deren Breite dem Durchmesser der Durchgangsbohrungen 9 entspricht. Mit dem Schenkel 11 liegt die winkelförmige Stütze 10 auf der Tischplatte auf und ist mit dieser durch einen nicht näher dargestellten Bolzen 14 verbunden.

An einer so angeordneten Stütze können nun Bauteile zum Aufbauen auch komplizierter Schweißkonstruktionen sicher und maßhaltig befestigt werden.

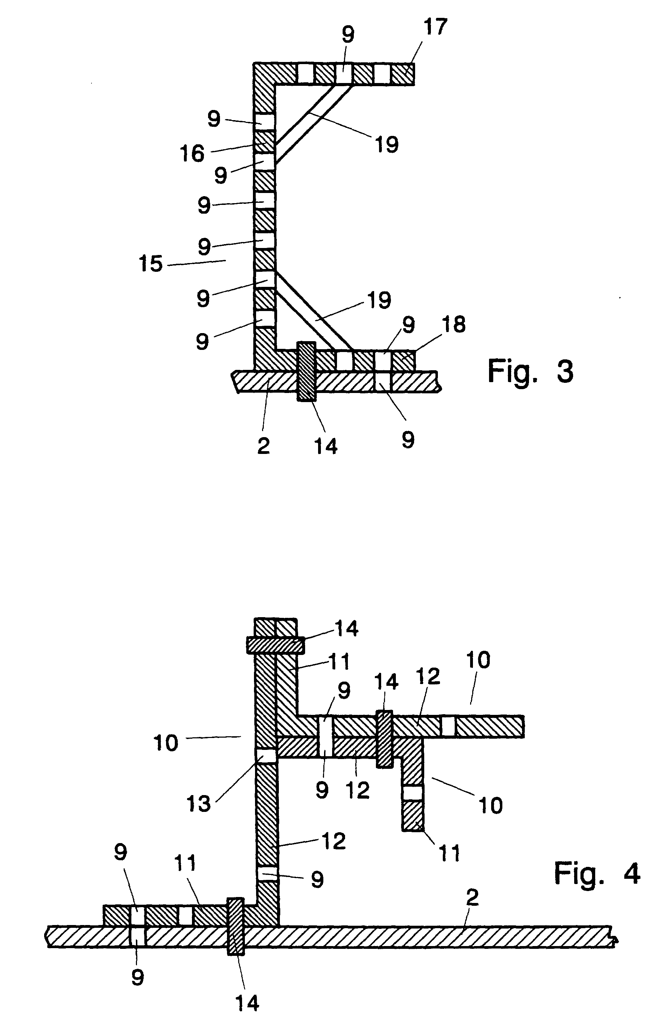

Beim Ausführungsbeispiel nach Fig.3 sitzt auf der Tischplatte 2 eine C-förmig ausgebildete Stütze 15, die in allen drei Schenkeln 16, 17 und 18 mit Durchgangsbohrungen 9 versehen ist. Die einzelnen zueinander benachbarten Schenkel sind mit Schrägstreben 19 verbunden, wodurch insbesondere bei größeren Stützen eine große Steifigkeit gewährleistet ist.

Mit einer solchen Stütze kann auch eine Festlegung von Bauteilen von oben her erfolgen, so daß auch bei verhältnismäßig großer Höhe eine sichere Festlegung in allen drei Richtungen erfolgen kann.

In Fig.4 ist gezeigt, wie mehrere winkelförmige Stützen 10 hintereinander angeordnet und jeweils mit Bolzen 14 miteinander verbunden sind. Dabei können die unterschiedlichsten Stützengrößen und Ausgestaltungen vorgesehen werden, um auch komplizierte Aufbauten zu ermöglichen.

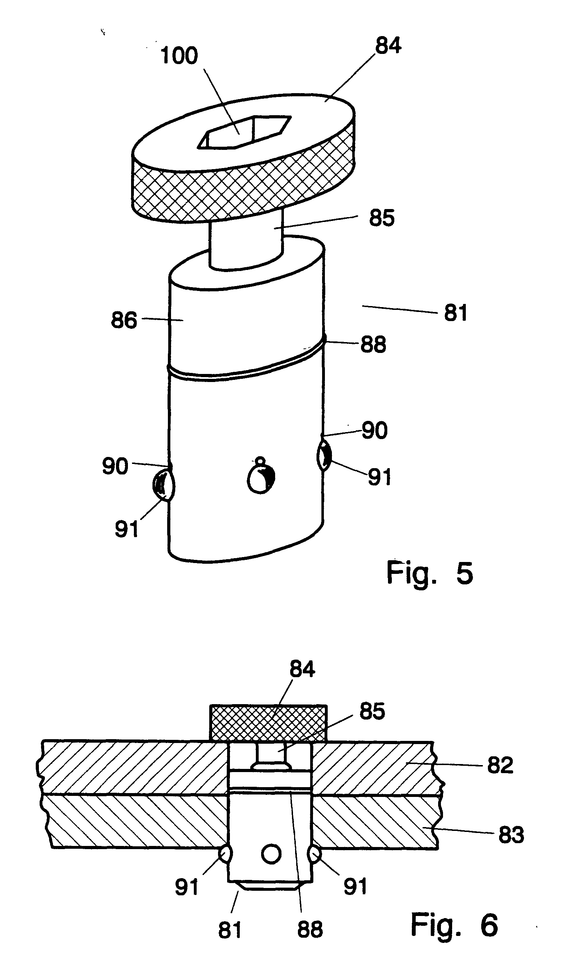

Mit 81 ist in Fig.5 ein Bolzen bezeichnet, der zum Fixieren von zwei mit Durchgangsöffnungen versehenen Bauteilen 82,83 dient, wie dies in Fig.6 dargestellt ist, wobei das Teil 83 beispielsweise der Tisch 2 sein kann. Die Durchgangsöffnungen dieser beiden Bauteile 82,83 sind entweder als zylindrische Durchgangsbohrungen oder als langlochförmige Durchbrechungen mit parallelen Wänden ausgebildet, in welche der Bolzen 81 mit nur geringem Spiel paßt. An seiner oberen Seite weist der Bolzen 81 einen Handgriff 84 auf, der drehfest mit einer Spindel 85 verbunden ist, die in das Gehäuse 86 des Bolzens 81 hineinragt. Das Gehäuse ist mit einer Umfangsnut 87 versehen, in welche ein Gummiring 88 eingesetzt ist. Im unteren Endbereich des Gehäuses 86 sind vier radiale Bohrungen 89 vorgesehen, die von außen her nachträglich mit einer Anstauchung 90 versehen sind und in welche von innen her Kugeln 91 eingesetzt sind. Aufgrund der durch die Anstauchung eingetretenen Querschnittsverjüngung an der Außenseite der Bohrungen 89 können die Kugeln dort nicht völlig austreten und sind so gesichert. Das Bolzen-Gehäuse 86 ist innen mit einem Sackloch 92 versehen, dessen oberhalb der radialen Bohrungen 89 liegender Abschnitt mit einem Innengewinde 93 ausgestattet ist. Das obere Ende des Bolzen-Gehäuses 86 ist mit einem ringförmigen Ansatz 94 versehen, der nach innen einbördelbar ist, wobei diese Einbördeln nach dem Zusammenbau des Bolzens erfolgt.

Der Handgriff 84 ist mit einer Gewindspindel 95 drehfest verbunden, welche in das Innengewinde 93 des Bolzen-Gehäuses 86 einschraubbar ist. Zwischen dem Handgriff 84 und der Gewindespindel 95 ist ein Spindelabschnitt 96 mit etwas geringerem Durchmesser vorgesehen, gegen den der Ansatz 94 gebördelt wird um den Bolzen nach oben abzudichten. Unterhalb der Gewindespindel 95 ist ein zylinderförmiger Teil 97 mit einem konischen Abschnitt 98 an seinem unteren Ende. Den unteren Abschluß dieses Spindelteils bildet ein Zapfen 99, der unmittelbar an den konischen Abschnitt anschließt.

In der am weitesten herausgedrehten Stellung des Spindelteils liegen die Kugeln 91 an dem Zapfen 99 an und werden beim Hereindrehen der Gewindespindel von dem konischen Abschnitt 98 nach außen gedrückt und dann vom zylinderförmigen Teil 97 in dieser Außenposition gehalten. Die Kugeln legen sich dabei an eine möglichst angefaste Kante einer Durchgangsbohrung des Bauteiles 83 an, wobei der Gummiring ein Mitdrehen des Bolzens verhindert. Sobald sich auch der Handgriff 84 an das andere Bauteil 82 anlegt, werden die Kugeln in die Anlagefläche hinein abgerollt. Sie drehen dabei auf der Innenseite auf dem zylindrischen Abschnitt 97 und auf der Außenseite auf der Anlagefläche, so daß sich eine Abrollung entsprechend einem Planetengetriebe ergibt.

Um das Anziehen des Bolzens mit noch mehr Kraft ausüben zu können, ist im Handgriff 84 noch zusätzlich ein Sechskantloch 100 zur Aufnahme eines Sechskantschlüssels vorgesehen.

## Patentansprüche

1. Bolzen(81) zum lösbaren Verbinden eines mit Durchgangsbohrungen oder dergleichen versehenen Bauteils(82,83), mit einem weiteren ebenfalls mit Durchgangsbohrungen versehenen Bauteil, wie z.B. einem Tisch, wobei die Durchgangsbohrungen im Querschnitt kreisförmig oder langlochförmig ausgebildet sind und zylindrische oder parallele Wände aufweisen, wobei der Bolzen(81) ein Bolzengehäuse(86) aufweist und mit einer axial verlaufenden Gewindespindel(95) versehen ist, welche drehfest mit einem nach außen herausgeführten Handgriff(84) verbunden ist, welcher als äußeres Spannmittel vorgesehen ist, wobei die Gewindespindel(95) an ihrem anderen Ende mit einem zylinderförmigen Teil(97) versehen ist, welcher an Verhakungsmitteln angreift, wobei beim Hereindrehen der Gewindespindel(95) in das Bolzengehäuse(86) die Verhakungsmittel(91) in radialer Richtung aus dem Bolzen(81) herausgedrückt und dann vom zylinderförmigen Teil(97) in dieser Position gehalten werden, wobei das Bolzengehäuse(86) mit einer Umfangsnut(87) versehen ist, in welche ein Gummiring(88) oder dergleichen eingelegt ist, der beim Drehen des Handgriffs ein Bremsmoment zwischen Bolzengehäuse(86) und Durchgangsbohrung ausübt, wobei als Verhakungsmittel Kugeln(91) vorgesehen sind, welche in radialen Bohrungen(89) des Bolzengehäuses(86) gelagert sind, und wobei die radialen Bohrungen(89) zur Aufnahme der Kugeln(91) an ihrer Gehäuseaußenseite wenigstens punktförmig angestaucht sind (90).

2. Bolzen nach Anspruch 1, **dadurch gekennzeichnet, daß** der zylinderförmige Teil(97) an seinem vom Handgriff(84) abgekehrten Ende einen konischen Abschnitt(98) aufweist, welcher beim Eindrehen der Gewindespindel in das Bolzen die gehäuse (86) Kugeln (91) nach außen drückt.

3. Bolzen nach Anspruch 2, **dadurch gekennzeichnet, daß** im Anschluß an den konischen Abschnitt(98) ein im Querschnitt dünnerer Zapfen(99) angeordnet ist, an welchen sich die Kugeln (91) im eingezogenen Zustand anlegen.

4. Bolzen nach einem der vorhergehenden Ansprüche, **dadurch gekennzeichnet, daß** das Bolzengehäuse(86) mit einer zur Aufnahme der Gewindespindel(95) vorgesehenen Sackbohrung(92) versehen ist.

5. Bolzen nach einem der vorhergehenden Ansprüche, **dadurch gekennzeichnet, daß** das zum Einsetzen der Gewindespindel(95) vorgesehene Ende des Bolzengehäuses(86) mit einem einbördelbaren, ringförmigen Ansatz(94) versehen ist.

6. Bolzen nach einem der vorhergehenden Ansprüche, **dadurch gekennzeichnet, daß** der Handgriff(84) zylinderförmig ausgebildet ist, mit einem gegenüber dem Bolzengehäuse(86) größeren Durchmesser.

7. Bolzen nach Anspruch 6, **dadurch gekennzeichnet, daß** die Umfangsfläche des zylinderförmigen Handgriffs(84) mit einer Rändelung versehen ist.

8. Bolzen nach einem der vorhergehenden Ansprüche, **dadurch gekennzeichnet, daß** der Handgriff (84) mit einer zentrisch angeordneten Öffnung(100) zur Aufnahme eines Drehwerkzeuges, beispielsweise eines Sechskantschlüssels versehen ist.

## Claims

1. Bolt (81) for joining one component (82, 83) through which holes etc. have been drilled to a second component such as a table through which holes have also been drilled with the possibility of subsequent re-separation of the two components, where the drilled holes have a circular or oblong cross-section and have cylindrical or parallel walls, where the bolt (81) is provided with a bolt housing (86), an axially threaded spindle (95), which turns with a handle (84) located outside the bolt that is provided externally to facilitate tightening, where the threaded spindle (95) is provided on one end with a cylindrical section (97) that engages locking devices (91) and where the locking devices (91) are pressed radially out of the bolt (81) when the threaded spindle (95) is screwed into the bolt housing (86) and than the locking devices (91) will be holt in this position by the cylindrical section (97), where the bolt housing (86) is provided with a groove (87) all round its circumference, into which a rubber ring (88) or similar part is fitted, which rubber ring (88) brings a brake moment between the bolt housing (86) an the drilled hole when the handle (84) will be turned, where balls (91) are provided as locking devices and are housed in recesses (89) bored radially in the bolt housing (86), the radial recesses (89) provided to accommodate the balls (91) are upset (90) at least in places on the outside of the housing.

2. Bolt according to claim 1, wherein the cylindrical section (97) has a conical extension (98) at the end of it that is facing away from the handle (84), which presses the balls (91) outwards when the threaded spindle is screwed into the bolt housing (86).

3. Bolt according to claim 2, wherein a pin (99) with a smaller cross-section is provided at the end of the conical section (98), against which the locking balls (91) rest when no pressure is being applied to them.

4. Bolt according to one of the previous claims, wherein a hole (92) is drilled in the bolt housing (86) to accommodate the threaded spindle (95).

5. Bolt according to one of the previous claims, wherein the end of the bolt housing (86) into which the threaded spindle (95) is to be inserted is provided with an annular projection (94) that can be crimped.

6. Bolt according to one of the previous claims, wherein the handle (84) is cylindrical in shape and has a larger diameter than the bolt housing (86).

7. Bolt according to claim 6, wherein the circumference of the cylindrical handle (84) has a knurled surface.

8. Bolt according to one of the previous claims, wherein the handle (84) is provided with a centrally positioned opening (100), into which a tool such as a hexagon key can be inserted for turning purposes.

## Revendications

1. Boulon (81) pour relier de façon amovible un élément (82,83) muni de perçages de passage ou analoues à un autre élément qui est également muni de perçages de passage, par ex. une table, sachant que les perçages de passage sont réalisés avec une section circulaire ou en forme de trou oblong et présentent des parois cylindriques ou parallèles, sachant que le boulon (81) est muni d'une tige filetée axiale (95) qui est reliée de façon à ne pas tourner à une manette (84) qui en sort et qui est prévue en tant qu'élément de serrage extérieur, sachant que la tige filetée (95) est munie à son autre extrémité d'une partie cylindrique (97) qui vient s'appliquer contre des moyens d'ancrage (91), et sachant qu'en vissant la tige filetée (95) dans boulon (81), les moyens d'ancrage (91) sont poussés hors du boulon (81) dans la direction radiale, sont prévues en tant que moyens d'ancrage des billes (91) motées dans des perçages radiaux (89) du boîtier de boulon (86), et les perçages radiaux (89) sont refoulés (90) au moins de façon ponctuelle sur le côté extérieur du boîtier pour recevoir les billes (91), et le boîtier de boulon (86) est muni d'une rainure périphérique (87) dans laquelle est logée une bgue en caoutchouc (88) ou analogue, et la manette (84) est réalisée de façon cylindrique, avec un diamètre supérieur à celui du boîtier de boulon (86).

2. Boulon selon la revendication 1, **caractérisé en ce que** la partie cylindrique (97) présente à son extrémité à la manette (84) un segment conique (98) qui pousse les moyens d'ancrage (91) vers l'extérieur lorsque l'on visse la tige filetée dans le boulon.

3. Boulon selon la revendication 2, **caractérisé en ce qu'**à la suite du segment conique (98) est placé un tenon (99) dont la section est plus mince et contre lequel sont appliqués les moyens d'ancrage des billes (91) à l'état rentré.

4. Boulon selon l'une des revendications précédentes, **caractérisé en ce que** le boîtier de boulon (86) est muni d'un perçage borgne (92) destiné à recevoir la tige filetée (95).

5. Boulon selon l'une des revendications précédentes, **caractérisé en ce que** l'extrémité du boîtier de boulon (86) prévue pour introduire la tige filetée (95) est munie d'une saillie annulaire (94) pouvant être sertie.

6. Boulon selon l'une des revendications précédentes, **caractérisé en ce que** la manette (84) est réalisée de façon cylindrique, avec un diamètre supérieur à celui du boîtier de boulon (86).

7. Boulon selon la revendication 6, **caractérisé en ce que** la surface périphérique de la manette cylindrque (84) est muni d'un moletage.

8. Boulon selon l'une des revendications précédentes, **caractérisé en ce que** la manette (84) est munie d'une ouverture centrale (100) destinée à recevoir un outil de vissage, par example une clé mâle six pans.
